# EUROPEAN PATENT APPLICATION

(11) **EP 2 924 639 A1**
(43) Date of publication of application: **30.09.2015**
(21) Application number: 15160728.0
(22) Date of filing: 25.03.2015
(51) Int. Cl.: G06Q 20/32

(54) **METHOD AND DEVICE FOR UTILIZING AN AVAILABLE BALANCE IN MOBILE MONEY ACCOUNT WHILE ROAMING**

(30) Priority: 28.03.2014 IN DE08922014
(71) Applicant: Comviva Technologies Limited, Gurgao, Haryana 122001 (IN)
(72) Inventor: Kansal, Axaya, 160062 Mohali (IN); Bv, Vikaas, 560078 Bangalore (IN)
(74) Representative: Høiberg A/S

(57) **Abstract**

The present invention provides method and device to be employed by mobile telecom service provider for enabling a subscriber to consume an available balance in a mobile money account while roaming in a visited network, wherein the mobile money account is being maintained in a home network of the subscriber.

## Description

### FIELD OF THE INVENTION:

The present invention relates to methods and system for use during mobile money transfer.

### BACKGROUND OF THE INVENTION:

In April 2007 Safaricom® launched a new mobile phone based payment and money transfer service, known as M-Pesa®. The service allows users to deposit money into an account stored on their cell phones on the basis of their mobile number, to send balances using SMS technology to other users (including sellers of goods and services), and to redeem deposits for regular money. Users are charged a small fee for sending and withdrawing money using the service. M-Pesa has spread quickly, and has become the most successful mobile phone based financial service in the developing world. By 2012, a stock of about 17 million M-Pesa® accounts had been registered in Kenya.

While systems equivalent to M-Pesa have been introduced in various countries to enable similar money transfer, there are still issues relating to its utilization. By way of example, a user of mobile money service (the service being provided by a Telecom Operator) is unable to spend the same in a different geography, for instance while roaming.

Currently the subscriber is required to create a new mobile money account with the telecom operator of the visited network, deposit the money in such mobile money account and utilize the same. Thus, it can be said that currently all mobile money systems work in their own regions and are not connected to any other mobile money system. This is particularly true when the Home Network Telecom operator is different from the Visited Network Telecom operator. This entails an additional work on part of the roaming user to get the local mobile money account created which introduces inconvenience to roaming users. Thus, a subscriber who balances available in the mobile money account of his home network is unable to use the same in a visited network.

In another known model a mobile money hub is created wherein the various telecom network operators providing mobile money services register with such hub where the hub takes care of flow of mobile money between home network mobile money system to visiting network mobile money system for the roaming user to make use of that money for payments with merchants in the visiting network where such merchants had registered with the visiting (local) network provider's mobile money system to accept mobile money payments from users. This introduces additional overheads and becomes a drawback for the telecom mobile money providers example including in the way of paying additional commissions for mobile money transactions to the hub system providers and in some cases such commission charge may be even passed to roaming users thus increasing the cost of such service.

A slightly varied known method to the above model is merchants themselves tie up with hub operators and enable the roaming users to perform the mobile money payment procedure by connecting the users to such hub where this hub takes care of settling with various telecom operators. In this model the telecom network operator loses direct control over merchants as they will now have to deal only with hub operator and the telecom network operator will be reduced to a mere mobile money accounts holder.

It is envisaged that in future when usage of mobile money will increase, subscribers maintaining a mobile money account in a home network would be interested in consuming the mobile money while roaming in a visited network in local currency, instead of being required to create a new account and deposit money into such new account. And such a solution does not incur additional commission charges for the transactions and also does not require significant changes to the existing network or mobile money infrastructure. However, to the best of the Inventor's knowledge, no solution catering to the above problem exists today.

### OBJECT OF THE INVENTION:

Thus, it is an object of the present invention to provide a method and a system for allowing a subscriber to consume mobile money as available in his mobile money account in the home network while roaming in a visited network in local currency.

### SUMMARY OF THE INVENTION:

Accordingly, the present invention provides a method for allowing a subscriber to consume mobile money as available in a home network while roaming in a visitor network, said method comprising the steps of:
receiving, at a mobile money transfer system forming part of the visited network, a request for transfer of an amount of electronic funds;
sending, by the mobile money transfer system forming part of the visited network, a request for transfer of the amount of electronic funds to the mobile money transfer system forming part of the home network maintaining an account of the subscriber, the request being sent over an existing signaling channel;
receiving, by the mobile money transfer system forming part of the visited network, an indication of transfer of the amount of funds from the account of the subscriber maintained at the mobile money transfer system forming part of the home network, the indication being received over the existing signaling channel; and
transferring, by the mobile money transfer system forming part of the visited network, the amount of funds.

The present invention also provides a method for allowing a subscriber to consume mobile money as available in a home network while roaming in a visitor network, said method comprising the steps of:
receiving, by a mobile money transfer system forming part of the home network and maintaining an account of the subscriber, a request for transfer of an amount of electronic funds from a mobile money transfer system forming part of the visited network, the request being received over an existing signaling channel;
sending, by the mobile money transfer system forming part of the home network, an indication of transfer of the amount of funds to the mobile money transfer system of the visited network, the indication being sent over the existing signaling channel; and
debiting, by the mobile money transfer system forming part of the home network, the amount of funds to the account of the subscriber.

The present invention further provides a device for allowing a subscriber to consume mobile money as available in a home network while roaming in a visitor network, said device comprising:
a receiver being in operational interconnection with a mobile money transfer system forming part of the visitor network, for receiving a request for transfer of an amount of electronic funds from a subscriber, the subscriber having a mobile money account in the home network;
a transmitter being in operational interconnection with the mobile money transfer system forming part of the visitor network for sending a request for transfer of the amount of electronic funds to the mobile money transfer system forming part of the home network, the request being sent by the transmitter over an existing signaling channel;
a receiver being in operational interconnection with the mobile money transfer system forming part of the visitor network for receiving an indication of transfer of the amount of funds from the mobile money transfer system forming part of the home network, the indication being received by the receiver over the existing signaling channel; and
a processor being in operational interconnection with the mobile money transfer system forming part of the visitor network for transferring the amount of funds.

The present invention further more provides a device for allowing a subscriber to consume mobile money as available in a home network while roaming in a visitor network, said device comprising:
a receiver being in operational interconnection with a mobile money transfer system forming part of the home network for receiving a request for transfer of an amount of electronic funds from a mobile money transfer system forming part of the visited network, the request being received by the receiver over an existing signaling channel;
a transmitter being in operational interconnection with a mobile money transfer system forming part of the home network for sending an indication of transfer of the amount of funds to the mobile money transfer system of the visited network, the indication being transmitted by the transmitter over an existing signaling channel; and
a processor being in operational interconnection with the mobile money transfer system forming part of the home network for debiting the amount of funds to the account of the subscriber.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### Brief Description of Figures:

These and other features, aspects, and advantages of the present invention will become better understood when the following detailed description is read with reference to the accompanying drawings in which like characters represent like parts throughout the drawings, wherein:
Figure 1 shows flow chart corresponding to process implemented by the mobile money system that forms part of the visited network in accordance with a first embodiment of the invention;
Figure 2 shows the flow chart corresponding to process implemented by the mobile money system that forms part of the home network in accordance with a second embodiment of the invention;
Figure 3 shows a detailed construction of the device which forms part of the visited network and implements the method as illustrated in figure 1;
Figure 4 shows a detailed construction of the device which forms part of the home visited network and implements the method as illustrated in figure 2; and
Figure 5 shows a detailed internal construction of the device illustrated in figure 3 or figure 4;
Figure 6 illustrates the data format of the SMS Request as transmitted by the visited network;
Figure 7 illustrates the data format of the SMS Response as transmitted by the home network;
Figure 8 illustrates the data format of the USSD Request as transmitted by the visited network; and
Figure 9 illustrates the data format of the USSD Response as transmitted by the home network.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### Detailed Description:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skill in the art to which this invention belongs. The system, methods, and examples provided herein are illustrative only and not intended to be limiting.

Embodiments of the present invention will be described below in detail with reference to the accompanying drawings.

In today's world operators provide for mobile money systems to their own subscribers. These different operators may be available in a same country or in different countries. When a subscriber leaves a home network and receives services from different operator (visited network), he is said to be roaming. Therefore, one can envisage a scenario wherein the subscriber may be in "national roaming with different operator", in which case the customer is seeking services from a visited network of a different operator, wherein the home network and the visited network are within the same country. This type of roaming is required when the home network does not provide services in all of the nation's territories and/or states. Another case of roaming referred as "international roaming" is countered when the customer is seeking services from a visited network, wherein the home network and the visited network are in different countries. In order to offer roaming services to subscribers, the operator need to put in place Roaming Agreements with each operator in each territory and in each country. While operators continuously engage in entering into such Roaming Agreements, these Roaming Agreements are targeted to providing basic roaming services, i.e. enabling the roaming subscriber to make and receive calls, send and receive SMS messages and to some extent access internet. As stated in the background section, there is no system currently available in place by which a subscriber who has subscribed to mobile money service in his corresponding home network is able to consume/spend mobile money as available in his mobile money account in the home network in a visited network, for instance while doing national roaming with different operator or while doing an international roaming.

As stated in the background section, there is an imminent need to provide methods that can be adopted by mobile telecom service provider (or shortly the operator) for enabling a subscriber to consume/spend mobile money as available in his mobile money account while roaming in a visited network, wherein the mobile money account is being maintained in a home network of the subscriber.

In this regard, it is worth mentioning that processes adopted for granting access to basic services to a roaming subscriber as well as the processes adopted for enabling a subscriber to consume/spend mobile money as available in his mobile money account while being stationed in the home network, are well-established processes and form part of the GSM standards. Thus, it will be in the interest of all parties to provide methods for enabling a subscriber to consume mobile money by using sub-steps:
(a) which form part of the GSM standards per se;
(b) which may be arrived by modifying the standards; or
(c) which do not require a separation standardization.

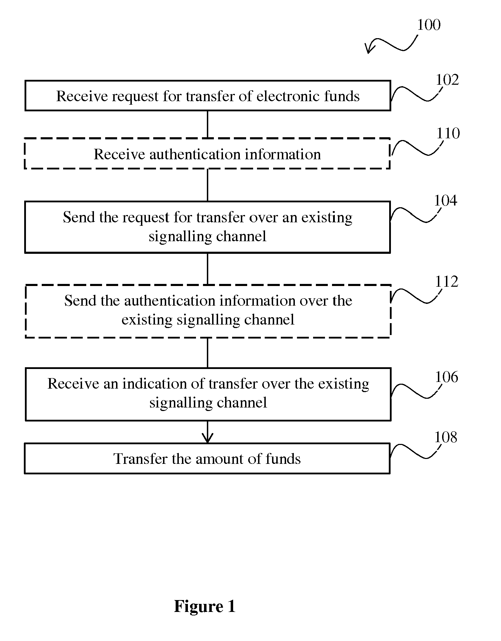

Referring to figure 1, the present invention provides a method 100 for allowing a subscriber to consume mobile money as available in a home network while roaming in a visitor network, said method comprising the steps of:
receiving, at a mobile money transfer system forming part of the visited network, a request for transfer of an amount of electronic funds (step 102);
sending, by the mobile money transfer system forming part of the visited network, a request for transfer of the amount of electronic funds to the mobile money transfer system forming part of the home network maintaining an account of the subscriber, the request being sent over an existing signaling channel (step 104);
receiving, by the mobile money transfer system forming part of the visited network, an indication of transfer of the amount of funds from the account of the subscriber maintained at the mobile money transfer system forming part of the home network, the indication being received over the existing signaling channel (step 106); and
transferring, by the mobile money transfer system forming part of the visited network, the amount of funds (step 108).

In an embodiment of the present invention, the request for transfer of an amount of electronic funds pertains to a first currency and the funds as contained in the subscriber account maintained at the mobile money transfer system forming part of the home network is in a second currency, with the first currency being different from the second currency.

In another embodiment, the method further comprises seeking, by the mobile money transfer system forming part of the visitor network, authentication information from the subscriber (step 110).

In yet another embodiment, the method further comprises sending, by the mobile money transfer system forming part of the visitor network, the authentication information as received from the subscriber over the signalling channel (step 112).

In a further embodiment of the present invention, the indication of transfer of the amount of funds is received by the mobile money transfer system forming part of the visitor network over the signalling channel.

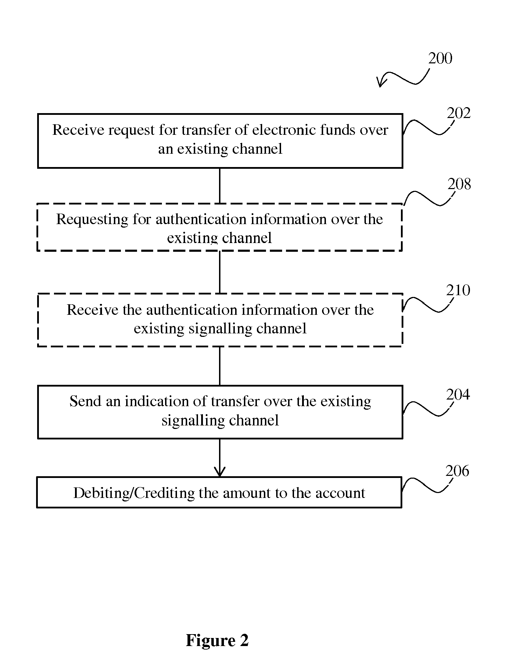

Referring to figure 2, the present invention also provides a method 200 for allowing a subscriber to consume mobile money as available in a home network while roaming in a visitor network, said method comprising the steps of:
receiving, by a mobile money transfer system forming part of the home network and maintaining an account of the subscriber, a request for transfer of an amount of electronic funds from a mobile money transfer system forming part of the visited network, the request being received over an existing signaling channel (step 202);
sending, by the mobile money transfer system forming part of the home network, an indication of transfer of the amount of funds to the mobile money transfer system of the visited network, the indication being sent over the existing signaling channel (step 204); and
debiting, by the mobile money transfer system forming part of the home network, the amount of funds to the account of the subscriber (step 206).

In an embodiment of the present invention, the indication of transfer of the amount of funds is sent by the mobile money transfer system forming part of the home network over the signalling channel.

In another embodiment, the method further comprises requesting, by the mobile money transfer system forming part of the home network, authentication information pertaining to the subscriber from the mobile money transfer system forming part of the visitor network (step 208).

In yet another embodiment of the present invention, the request for authentication information is sent by the mobile money transfer system forming part of the home network to the mobile money transfer system forming part of the visitor network over the signalling channel.

In still another embodiment, the method further comprises receiving over the existing signalling, by the mobile money transfer system forming part of the home network, the authentication information pertaining to the subscriber (step 210).

Complementing the above 3 paragraphs read together and for reducing the exposure of roaming subscriber's PIN in the visiting network, once the subscriber initiates the transaction in the Visiting network, the visiting network send the authorization request to the home network. Home network, after doing all the validation checks, initiates a request to the roaming subscriber through any of the telecom bearers (USSD, IVR, SMS etc) and request for confirmation from the subscriber in the form of his Transaction PIN. Upon successful receiving of confirmation of TPIN, the home network sends the confirmation to the Visiting network against the same authorizing request and transaction is processed in Visiting network.

More particularly in accordance with yet another embodiment of the present invention, the request for authentication information is sent by the mobile money transfer system forming part of the home network to the subscriber directly over any of the existing bearers including USSD, IVR and SMS.

In accordance with still another embodiment of the present invention, wherein the same further comprises receiving directly from the subscriber over any of the existing bearers including USSD, IVR and SMS, the authentication information pertaining to the subscriber (step 210).

In a further embodiment of the present invention, the step of debiting, by the mobile money transfer system forming part of the home network, the amount of funds to the account of the subscriber includes a step of applying a foreign exchange rate.

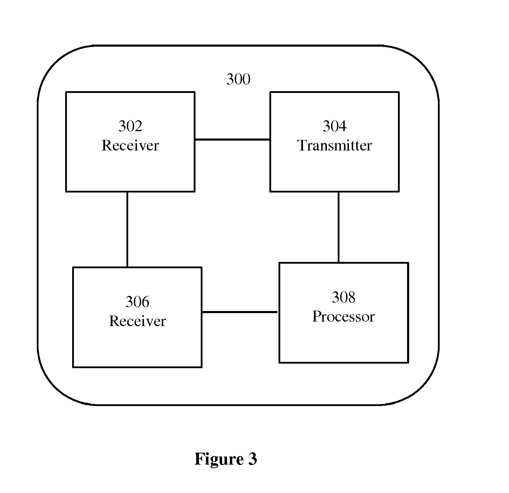

Referring to figure 3, the present invention further provides a device 300 for allowing a subscriber to consume mobile money as available in a home network while roaming in a visitor network, said device comprising:
a receiver 302 being in operational interconnection with a mobile money transfer system forming part of the visitor network, for receiving a request for transfer of an amount of electronic funds from a subscriber, the subscriber having a mobile money account in the home network;
a transmitter 304 being in operational interconnection with the mobile money transfer system forming part of the visitor network for sending a request for transfer of the amount of electronic funds to the mobile money transfer system forming part of the home network, the request being sent by the transmitter over an existing signaling channel;
a receiver 306 being in operational interconnection with the mobile money transfer system forming part of the visitor network for receiving an indication of transfer of the amount of funds from the mobile money transfer system forming part of the home network, the indication being received by the receiver over the existing signaling channel; and
a processor 308 being in operational interconnection with the mobile money transfer system forming part of the visitor network for transferring the amount of funds.

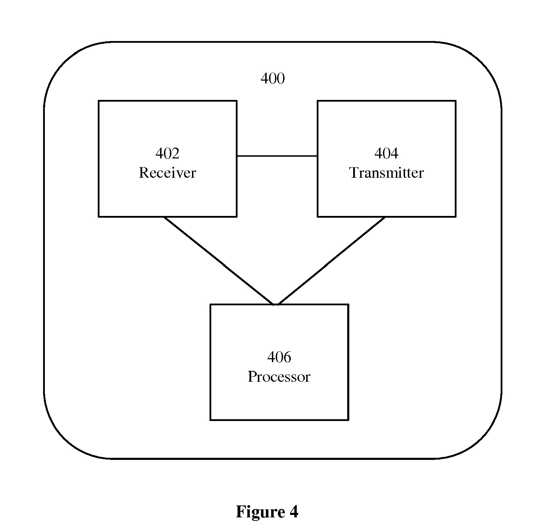

Referring to figure 4, the present invention further more provides a device 400 for allowing a subscriber to consume mobile money as available in a home network while roaming in a visitor network, said device comprising:
a receiver 402 being in operational interconnection with a mobile money transfer system forming part of the home network for receiving a request for transfer of an amount of electronic funds from a mobile money transfer system forming part of the visited network, the request being received by the receiver over an existing signaling channel;
a transmitter 404 being in operational interconnection with a mobile money transfer system forming part of the home network for sending an indication of transfer of the amount of funds to the mobile money transfer system of the visited network, the indication being transmitted by the transmitter over an existing signaling channel; and
a processor 406 being in operational interconnection with the mobile money transfer system forming part of the home network for debiting the amount of funds to the account of the subscriber.

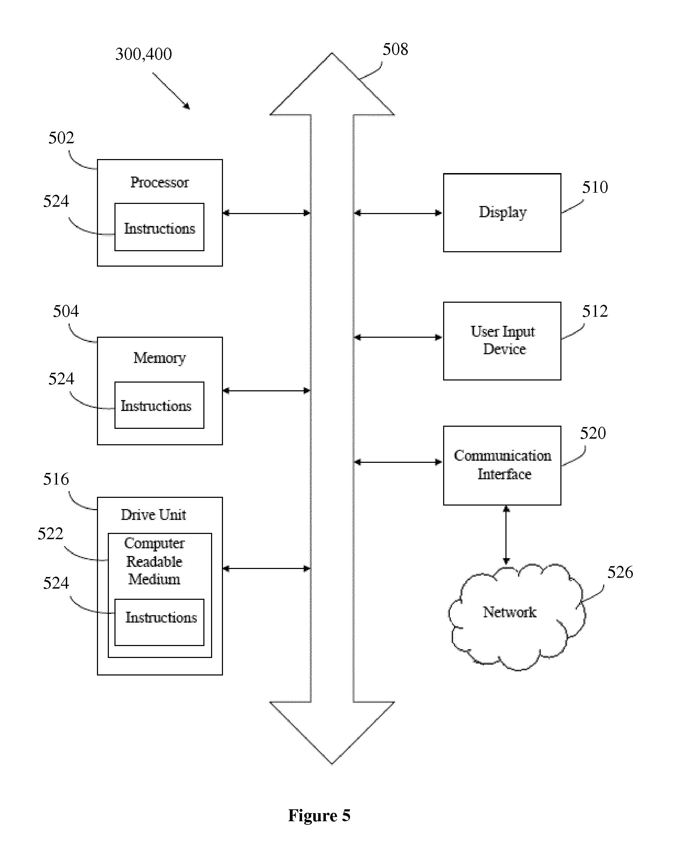

Referring to figure 5, yet another typical hardware configuration of the device 300 or the device 400 in the form of a computer system 500 is shown. The computer system 500 can include a set of instructions that can be executed to cause the computer system 500 to perform any one or more of the methods disclosed. The computer system 500 may operate as a standalone device or may be connected, e.g., using a network, to other computer systems or peripheral devices.

In a networked deployment, the computer system 500 may operate in the capacity of a server or as a client user computer in a server-client user network environment, or as a peer computer system in a peer-to-peer (or distributed) network environment. The computer system 500 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. Further, while a single computer system 500 is illustrated, the term "system" shall also be taken to include any collection of systems or sub-systems that individually or jointly execute a set, or multiple sets, of instructions to perform one or more computer functions.

The computer system 500 may include a processor 502, e.g., a central processing unit (CPU), a graphics processing unit (GPU), or both. The processor 502 may be a component in a variety of systems. For example, the processor 502 may be part of a standard personal computer or a workstation. The processor 502 may be one or more general processors, digital signal processors, application specific integrated circuits, field programmable gate arrays, servers, networks, digital circuits, analog circuits, combinations thereof, or other now known or later developed devices for analysing and processing data The processor 502 may implement a software program, such as code generated manually (i.e., programmed).

The computer system 500 may include a memory 504, such as a memory 504 that can communicate via a bus 508. The memory 504 may be a main memory, a static memory, or a dynamic memory. The memory 504 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one example, the memory 504 includes a cache or random access memory for the processor 502. In alternative examples, the memory 504 is separate from the processor 502, such as a cache memory of a processor, the system memory, or other memory. The memory 504 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 504 is operable to store instructions executable by the processor 502. The functions, acts or tasks illustrated in the figures or described may be performed by the programmed processor 502 executing the instructions stored in the memory 504. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 500 may or may not further include a display unit 510, such as a liquid crystal display (LCD), an organic light emitting diode (OLED), a flat panel display, a solid state display, a cathode ray tube (CRT), a projector, a printer or other now known or later developed display device for outputting determined information. The display 510 may act as an interface for the user to see the functioning of the processor 502, or specifically as an interface with the software stored in the memory 504 or in the drive unit 516.

Additionally, the computer system 500 may include an input device 512 configured to allow a user to interact with any of the components of system 500. The input device 512 may be a number pad, a keyboard, or a cursor control device, such as a mouse, or a joystick, touch screen display, remote control or any other device operative to interact with the computer system 500.

The computer system 500 may also include a disk or optical drive unit 516. The disk drive unit 516 may include a computer-readable medium 522 in which one or more sets of instructions 524, e.g. software, can be embedded. Further, the instructions 524 may embody one or more of the methods or logic as described. In a particular example, the instructions 524 may reside completely, or at least partially, within the memory 504 or within the processor 502 during execution by the computer system 500. The memory 504 and the processor 502 also may include computer-readable media as discussed above.

The present invention contemplates a computer-readable medium that includes instructions 524 or receives and executes instructions 524 responsive to a propagated signal so that a device connected to a network 526 can communicate voice, video, audio, images or any other data over the network 526. Further, the instructions 524 may be transmitted or received over the network 526 via a communication port or interface 520 or using a bus 508. The communication port or interface 520 may be a part of the processor 502 or may be a separate component. The communication port 520 may be created in software or may be a physical connection in hardware. The communication port 520 may be configured to connect with a network 526, external media, the display 510, or any other components in system 500, or combinations thereof. The connection with the network 526 may be a physical connection, such as a wired Ethernet connection or may be established wirelessly as discussed later. Likewise, the additional connections with other components of the system 500 may be physical connections or may be established wirelessly. The network 526 may alternatively be directly connected to the bus 508.

The network 526 may include wired networks, wireless networks, Ethernet AVB networks, or combinations thereof. The wireless network may be a cellular telephone network, an 802.11, 802.16, 802.20, 802.1Q or WiMax network. Further, the network 526 may be a public network, such as the Internet, a private network, such as an intranet, or combinations thereof, and may utilize a variety of networking protocols now available or later developed including, but not limited to TCP/IP based networking protocols.

In an alternative example, dedicated hardware implementations, such as application specific integrated circuits, programmable logic arrays and other hardware devices, can be constructed to implement various parts of the system 500.

Applications that may include the systems can broadly include a variety of electronic and computer systems. One or more examples described may implement functions using two or more specific interconnected hardware modules or devices with related control and data signals that can be communicated between and through the modules, or as portions of an application-specific integrated circuit. Accordingly, the present system encompasses software, firmware, and hardware implementations.

The system described may be implemented by software programs executable by a computer system. Further, in a non-limited example, implementations can include distributed processing, component/object distributed processing, and parallel processing. Alternatively, virtual computer system processing can be constructed to implement various parts of the system.

The system is not limited to operation with any particular standards and protocols. For example, standards for Internet and other packet switched network transmission (e.g., TCP/IP, UDP/IP, HTML, HTTP) may be used. Such standards are periodically superseded by faster or more efficient equivalents having essentially the same functions. Accordingly, replacement standards and protocols having the same or similar functions as those disclosed are considered equivalents thereof.

In the following paragraphs a detailed description about implementation of the aforesaid method is provided. It should however, be understood every implementation of the method need not follow the scenario as mentioned in the following paragraphs. Thus, the scope of the claims is intended to be restricted only on the basis of the claims and their equivalents and not on the basis of the examples provided herein below.

### TECHNICAL METHOD OF EXAMPLE 1:

To start with, once the subscriber registers with the visited network, the subscriber is informed of a short code let's say for example, *5678#, which the subscriber has to dial to reach the mobile money system as provided by the visited network. Upon dialing the short code, the subscriber is provided a menu and requested to elect the option.

Once the subscriber reaches the mobile money system in the visited network, the same is in a position to obtain the subscriber's identification as may have been allocated in the home network. Typically, this identification may be Mobile Subscriber Integrated Services Digital Network (MSISDN) number and/or Subscriber Identity Module (SIM) number which may be readily available with the mobile money system forming part of the visited network. The mobile money system forming part of the visited network also determines details of a short code given to the mobile money system that forms part of the home network. This may be stored in a database. Assuming that the subscriber is interested in withdrawing cash, the subscriber will be prompted to enter:
(a) agent code;
(b) the amount; and
(c) PIN number.

The details may be collected by the mobile money system of the visited network from the roaming subscriber using the same procedure as may be adopted for collecting the information from a local subscriber.

Once the details have been collected, the mobile money system uses an existing signaling channel which exists between a GMSC forming part of the visited network and a GMSC forming part of the home network to send a request for transfer of the amount of electronic funds for delivery to a mobile money system forming part of the home network, wherein the mobile money system forming part of the home network maintains an account of the subscriber.

In a particularly beneficial embodiment, the mobile money system generates a SMS message, wherein the destination for the SMS message is identified as the mobile money system that forms part of the home network and sends the SMS message. It can be observed that the SMS message is formatted so as to conform to GSM 9.02 standard which is prescribed for Mobile Application Part (MAP)-MOBILE TERMINATED / MOBILE ORIGINATED - FORWRAD-SHORT-MESSAGE Request.

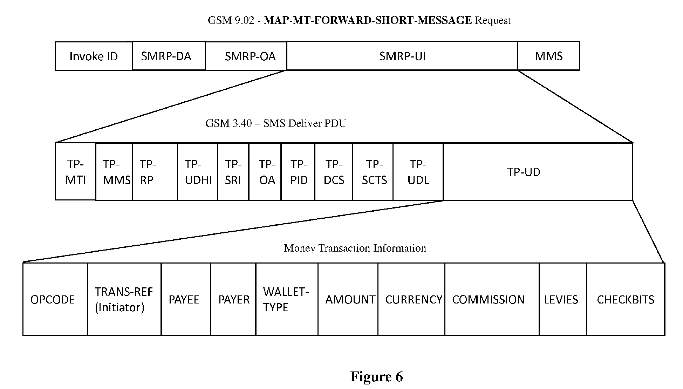

Some of the prominent fields of the MAP-MT-SM-Request are shown in Figure 6 and include:
Invoke ID: A parameter that identifies corresponding service primitives. The parameter is supplied by the MAP service-user and must be unique over each service-user/service-provider interface.
SMRP-DA: A parameter can contain either an IMSI or a LMSI in case of the mobile terminated Short Message. The use of the LMSI is an operator option. The LMSI can be provided if it is received from the HLR. The IMSI is used if the use of the LMSI is not available. This parameter is omitted in the mobile terminated subsequent SM transfers. In the mobile originated SM transfer this parameter contains the Service Centre address received from the mobile station.
SMRP-OA: A parameter which can contain Service Centre address received from the originating Service Centre in the mobile terminated SM transfer. This parameter is omitted in the mobile terminated subsequent SM transfers. The MSISDN received from the VLR is inserted in this parameter in the mobile originated SM transfer.
MMS: A parameter which signifies More Message to Send.
SMRP-UI: A parameter which corresponds to short message transfer protocol data unit received from the Service Centre is inserted in this parameter. More particularly, this parameter represents the user data field carried by the short message service relay sub-layer protocol.

Generally, the formatting of SMRP-UI is prescribed in GSM 3.40 and some of the prominent fields are shown and include:
TP-MTI: Message Type Indicator;
TP-MMS: More Message to Send;
TP-RP: Reply Path;
TP-UDHI: User Data Header Indicator;
TP-SRI: Status Report Indication;
TP-OA: Originating Address;
TP-PID: Protocol Identifier;
TP-DCS: Data Coding Scheme;
TP-SCTS: Service Centre Time Stamp
TP-UDL: User Data Length; and
TP-UD: User Data.

It may be noted that in addition to the above indicated fields, there may be additional fields and details of such fields can be found in the GSM standard.

In accordance with a preferred aspect of the invention, the field TP-UD, which is the field allocated for carrying user data can further comprise the some of the following fields:
OPCODE: This field may contain the code of the operation, such as debit/credit in the current context.
TRANS-REF (Initiator): This field may carry a transaction ID reference for the specification transaction at the mobile money system forming part of the visited network.
PAYEE: This field contains information pertaining to recipient of the transaction proceeds.
PAYER: This field contains the information pertaining to source of the transaction funds.
WALLET-TYPE: This field may be used to depict the type of wallet.
AMOUNT: This field indicates the amount being transacted.
CURRENCY: This indicates the currency in which the transaction is requested.
COMMISSION: This field indicates a commission for the transaction as may be charged by the mobile money system of the visited network.
LEVIES: This field can indicate other levies such as charges, taxes, etc. which may be involved in the transaction, if any.
CHECK BITS: This field can contain information which will help detect tampering and making the transaction secure.

Once the request message (in this particular embodiment, the SMS message) is delivered to the mobile money system forming part of the home network, the same can perform one or more operations to determine whether the transaction request can be progressed. Once it is determined that the transaction can be progressed, the mobile money system, sends a response via the GMSC of the home network to the GMSC of the visited network for eventual delivery to the mobile money system of the visited network.

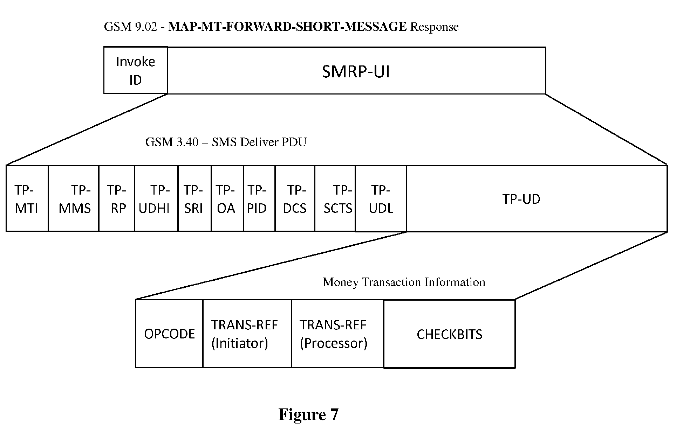

In a particularly beneficial embodiment, the mobile money system of the home network generates a SMS message, wherein the destination for the SMS message is identified as the mobile money system that forms part of the visited network and sends the SMS message. In a preferred aspect of the invention, the format of the SMS message conforms to GSM 9.02 standard which is prescribed for Mobile Application Part (MAP)-FORWRAD-SHORT-MESSAGE Response. The format of the SMS response message is shown in figure 7 and some of the prominent fields of the MAP-MT-SM-Response include:
Invoke ID: A parameter that identifies corresponding service primitives. The parameter is supplied by the MAP service-user and must be unique over each service-user/service-provider interface.
SMRP-UI: A parameter which corresponds to short message transfer protocol data unit received from the Service Centre is inserted in this parameter. More particularly, this parameter represents the user data field carried by the short message service relay sub-layer protocol.

Generally, the formatting of SMRP-UI is prescribed in GSM 3.40 and the details of the same have been described in detail with reference to figure 6. In accordance with a preferred aspect of the invention, the fields TP-UD that forms part of the MAP-MT-SM-Response are different from the fields of TP-UD as contained in the MAP-MT-SM-Request. Some of the prominent fields of TP-UD that forms part of the MAP-MT-SM-Response include:
OPCODE: This field may contain the code of the operation, such as debit/credit in the current context.
TRANS-REF (Initiator): This field may carry a transaction ID reference for the specification transaction at the mobile money system forming part of the visited network.
TRANS-REF (Processor): This field may carry a transaction ID reference for the specification transaction at the mobile money system forming part of the home network.
CHECK BITS: This field can contain information which will help detect tampering and making the transaction secure.

Apart from sending the response to the Mobile money system forming part of the visited network, the mobile money system that forms part of the home network also adjusts the account of the subscriber so as to debit the same.

Once the mobile money system forming part of the visited network receives the aforesaid response, it takes the necessary step of disbursing the money. More particularly, in this particular embodiment, it will send an appropriate intimation to the agent (whose code number it received at the start of the process) thereby allowing the subscriber to withdraw the approved amount from the agent.

### TECHNICAL METHOD OF EXAMPLE 2:

To start with, once the subscriber registers with the visited network, the subscriber is informed of a short code let's say for example, *5678#, which the subscriber has to dial to reach the mobile money system as provided by the visited network. Upon dialing the short code, the subscriber is provided a menu and requested to elect the option.

Once the subscriber reaches the mobile money system in the visited network, the same is in a position to obtain the subscriber's identification as may have been allocated in the home network. Typically, this identification may be Mobile Subscriber Integrated Services Digital Network (MSISDN) number and/or Subscriber Identity Module (SIM) number which may be readily available with the mobile money system forming part of the visited network. The mobile money system forming part of the visited network also determines details of a short code given to the mobile money system that forms part of the home network. This may be stored in a database. Assuming that the subscriber is interested in withdrawing cash, the subscriber will be prompted to enter:
(a) agent code;
(b) the amount; and
(c) PIN number.

The details may be collected by the mobile money system of the visited network from the roaming subscriber using the same procedure as may be adopted for collecting the information from a local subscriber.

Once the details have been collected, the mobile money system uses an existing signaling channel which exists between a GMSC forming part of the visited network and a GMSC forming part of the home network to send a request for transfer of the amount of electronic funds for delivery to a mobile money system forming part of the home network, wherein the mobile money system forming part of the home network maintains an account of the subscriber.

In a particularly beneficial embodiment, the mobile money system uses a signaling channel as defined by GSM 9.02 standard for unstructured supplementary service data (USSD). More particularly, the mobile money system generates a USSD message, wherein the destination for the USSD message is identified as the mobile money system that forms part of the home network and sends the USSD message. It can be observed that the USSD message is formatted so as to conform to GSM 9.02 standard which is prescribed for Mobile Application Part (MAP)-UNSTRUCTURED-SUPPLEMENTARY SERVICE-MESSAGE Request.

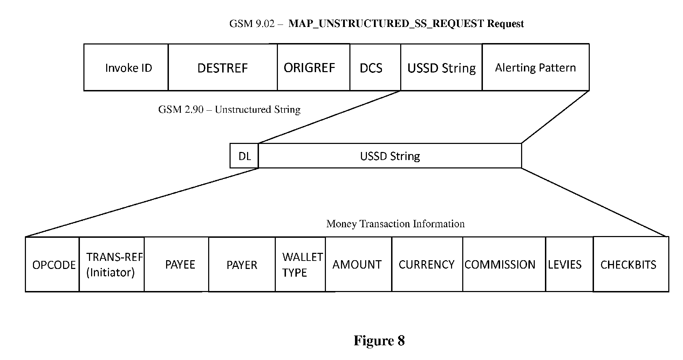

Some of the prominent fields of the MAP-Unstructured-SS-Request are shown in Figure 8 and include:
Invoke ID: A parameter that identifies corresponding service primitives. The parameter is supplied by the MAP service-user and must be unique over each service-user/service-provider interface.
DESTREF: This parameter is a reference which refines the identification of the called process. It may be identical to Destination address.
ORIGREF: This parameter is a reference may also refine the identification of the called process. It may be identical to Origination address.
DCS: Data Coding Scheme
USSD STRING: This parameter contains a string of unstructured information in an Unstructured Supplementary Service Data operation. The string is sent either by the mobile user or the network. The contents of a string sent by the mobile station are interpreted by the network as specified in TS GSM 02.90.
Alerting Pattern: This may be for alerting purpose.

Generally, the formatting of USSD STRING is prescribed in GSM 2.90 and includes field allocated for carrying user data. In accordance with a preferred aspect of the invention, the field allocated for carrying user data can further comprise the some of the following fields:
OPCODE: This field may contain the code of the operation, such as debit/credit in the current context.
TRANS-REF (Initiator): This field may carry a transaction ID reference for the specification transaction at the mobile money system forming part of the visited network.
PAYEE: This field contains information pertaining to recipient of the transaction proceeds.
PAYER: This field contains the information pertaining to source of the transaction funds.
WALLET-TYPE: This field may be used to depict the type of wallet.
AMOUNT: This field indicates the amount being transacted.
CURRENCY: This indicates the currency in which the transaction is requested.
COMMISSION: This field indicates a commission for the transaction as may be charged by the mobile money system of the visited network.
LEVIES: This field can indicate other levies such as charges, taxes, etc. which may be involved in the transaction, if any.
CHECK BITS: This field can contain information which will help detect tampering and making the transaction secure.

Once the request message (in this particular embodiment, the USSD message) is delivered to the mobile money system forming part of the home network, the same can perform one or more operations to determine whether the transaction request can be progressed. Once it is determined that the transaction can be progressed, the mobile money system, sends a response via the GMSC of the home network to the GMSC of the visited network for eventual delivery to the mobile money system of the visited network.

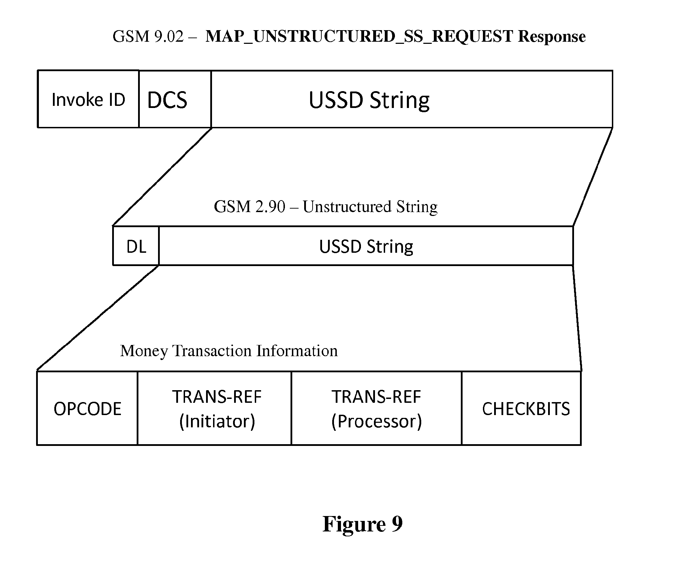

In a particularly beneficial embodiment, the mobile money system of the home network generates a USSD RESPONSE message, wherein the destination for the USSD RESPONSE message is identified as the mobile money system that forms part of the visited network and sends the USSD RESPONSE message. In a preferred aspect of the invention, the format of the USSD RESPONSE message conforms to GSM 9.02 standard and some of the prominent fields of the same are illustrated in figure 9 and include:
Invoke ID: A parameter that identifies corresponding service primitives. The parameter is supplied by the MAP service-user and must be unique over each service-user/service-provider interface.
DCS: Data Coding Scheme; and
USSD STRING: This parameter contains a string of unstructured information in an Unstructured Supplementary Service Data operation. The string is sent either by the mobile user or the network. The contents of a string sent by the mobile station are interpreted by the network as specified in TS GSM 02.90.

Generally, the formatting of USSD STRING is prescribed in GSM 2.90 and includes field allocated for carrying user data. In accordance with a preferred aspect of the invention, the field allocated for carrying user data can further comprise the some of the following fields:
OPCODE: This field may contain the code of the operation, such as debit/credit in the current context.
TRANS-REF (Initiator): This field may carry a transaction ID reference for the specification transaction at the mobile money system forming part of the visited network.
TRANS-REF (Processor): This field may carry a transaction ID reference for the specification transaction at the mobile money system forming part of the home network.
CHECK BITS: This field can contain information which will help detect tampering and making the transaction secure.

Apart from sending the response to the Mobile money system forming part of the visited network, the mobile money system that forms part of the home network also adjusts the account of the subscriber so as to debit the same.

Once the mobile money system forming part of the visited network receives the aforesaid response, it takes the necessary step of disbursing the money. More particularly, in this particular embodiment, it will send an appropriate intimation to the agent (whose code number it received at the start of the process) thereby allowing the subscriber to withdraw the approved amount from the agent.

While specific language has been used to describe the disclosure, any limitations arising on account of the same are not intended. As would be apparent to a person in the art, various working modifications may be made to the method in order to implement the inventive concept as taught herein.

For example, while in the above illustrated examples talk about withdrawal of the cash by the subscriber himself, the process is not restricted to mere withdrawal and can be adopted for transfer of funds to the network provider of the visited network or to third parties. The funds can be transferred to the network provider of the visited network for purchasing commodities made available by him, for example, talk time, SMS package, or any other value added service. The funds can also be transferred to third parties such as merchants, who have an account maintained with the mobile money system that forms part of the visited network.

Since the transfer process involves an authentication step (wherein the subscriber is required to input the PIN), the PIN authentication request need not necessarily be received by the mobile money system that forms part of the visited network from the subscriber. Alternatively for reducing the exposure of roaming subscriber's PIN in the visiting network, once the subscriber initiates the transaction in the Visiting network, the visiting network send the authorization request to the home network. Home network, after doing all the validation checks, initiates a request to the roaming user through any of the telecom bearers (USSD, IVR, SMS etc) and request for confirmation from the subscriber in the form of his Transaction PIN. Upon successful receiving of confirmation of TPIN, the home network sends the confirmation to the Visiting network against the same authorizing request and transaction is processed in Visiting network.

As stated in the one of the earlier paragraphs, there are two types of roaming namely "national roaming with different operator" and "international roaming". In case the request is received by the mobile money system of the home network in a scenario pertaining to national roaming, the mobile money system of the home network need not perform any foreign exchange conversions. On the other hand, if the request for transfer of funds is received from a visited network, wherein the currency of the visited network is different from the currency of the home network, the mobile money system of the home network may engage a foreign exchange converter system for conversion purposes and transfer the funds in the converted currency.

It is also pertinent to note that the structure of the subscriber data (i.e. SMRP-UI or USSD-STRING, as the case may be) can comprise fewer or additional fields. Also the arrangement of the fields can be substantially different from what has been demonstrated in the figures 6 to 9. The fields which are required to be present inside the subscriber data can be chosen by person skilled in the art depending upon the scenario.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A method 100 for allowing a subscriber to consume mobile money as available in a home network while roaming in a visitor network, said method comprising the steps of:
receiving, at a mobile money transfer system forming part of the visited network, a request for transfer of an amount of electronic funds (step 102);
sending, by the mobile money transfer system forming part of the visited network, a request for transfer of the amount of electronic funds to the mobile money transfer system forming part of the home network maintaining an account of the subscriber, the request being sent over an existing signaling channel (step 104);
receiving, by the mobile money transfer system forming part of the visited network, an indication of transfer of the amount of funds from the account of the subscriber maintained at the mobile money transfer system forming part of the home network, the indication being received over the existing signaling channel (step 106); and
transferring, by the mobile money transfer system forming part of the visited network, the amount of funds (step 108).

2. The method as claimed in claim 1, wherein the request for transfer of an amount of electronic funds pertains to a first currency and the funds as contained in the subscriber account maintained at the mobile money transfer system forming part of the home network is in a second currency, with the first currency being different from the second currency.

3. The method as claimed in claim 1, wherein the same further comprises seeking, by the mobile money transfer system forming part of the visitor network, authentication information from the subscriber (step 110).

4. The method as claimed in claim 1, wherein the same further comprises sending, by the mobile money transfer system forming part of the visitor network, the authentication information as received from the subscriber over the signalling channel (step 112).

5. The method as claimed in claim 1, wherein the indication of transfer of the amount of funds is received by the mobile money transfer system forming part of the visitor network over the signalling channel.

6. A method 200 for allowing a subscriber to consume mobile money as available in a home network while roaming in a visitor network, said method comprising the steps of:
receiving, by a mobile money transfer system forming part of the home network and maintaining an account of the subscriber, a request for transfer of an amount of electronic funds from a mobile money transfer system forming part of the visited network, the request being received over an existing signaling channel (step 202);
sending, by the mobile money transfer system forming part of the home network, an indication of transfer of the amount of funds to the mobile money transfer system of the visited network, the indication being sent over the existing signaling channel (step 204); and
debiting, by the mobile money transfer system forming part of the home network, the amount of funds to the account of the subscriber (step 206).

7. The method as claimed in claim 6, wherein the indication of transfer of the amount of funds is sent by the mobile money transfer system forming part of the home network over the signalling channel.

8. The method as claimed in claim 6, wherein the same further comprises requesting, by the mobile money transfer system forming part of the home network, authentication information pertaining to the subscriber from the mobile money transfer system forming part of the visitor network (step 208).

9. The method as claimed in claim 6, wherein the request for authentication information is sent by the mobile money transfer system forming part of the home network to the mobile money transfer system forming part of the visitor network over the signalling channel.

10. The method as claimed in claim 6, wherein the same further comprises receiving over the existing signalling channel, by the mobile money transfer system forming part of the home network, the authentication information pertaining to the subscriber (step 210).

11. The method as claimed in claim 6, wherein the request for authentication information is sent by the mobile money transfer system forming part of the home network to the subscriber directly over any of the existing bearers including USSD, IVR and SMS.

12. The method as claimed in claim 11, wherein the same further comprises receiving directly from the subscriber over any of the existing bearers including USSD, IVR and SMS, the authentication information pertaining to the subscriber (step 210).

13. The method as claimed in claim 6, wherein the step of debiting, by the mobile money transfer system forming part of the home network, the amount of funds to the account of the subscriber includes a step of applying a foreign exchange rate.

14. The method as claimed in claim 6, wherein the step of debiting, by the mobile money transfer system forming part of the home network, the amount of funds to the account of the subscriber includes a step of applying a foreign exchange rate.

15. A device 300 for allowing a subscriber to consume mobile money as available in a home network while roaming in a visitor network, said device comprising:
a receiver 302 being in operational interconnection with a mobile money transfer system forming part of the visitor network, for receiving a request for transfer of an amount of electronic funds from a subscriber, the subscriber having a mobile money account in the home network;
a transmitter 304 being in operational interconnection with the mobile money transfer system forming part of the visitor network for sending a request for transfer of the amount of electronic funds to the mobile money transfer system forming part of the home network, the request being sent by the transmitter over an existing signaling channel;
a receiver 306 being in operational interconnection with the mobile money transfer system forming part of the visitor network for receiving an indication of transfer of the amount of funds from the mobile money transfer system forming part of the home network, the indication being received by the receiver over the existing signaling channel; and
a processor 308 being in operational interconnection with the mobile money transfer system forming part of the visitor network for transferring the amount of funds.

16. A device 400 for allowing a subscriber to consume mobile money as available in a home network while roaming in a visitor network, said device comprising:
a receiver 402 being in operational interconnection with a mobile money transfer system forming part of the home network for receiving a request for transfer of an amount of electronic funds from a mobile money transfer system forming part of the visited network, the request being received by the receiver over an existing signaling channel;
a transmitter 404 being in operational interconnection with a mobile money transfer system forming part of the home network for sending an indication of transfer of the amount of funds to the mobile money transfer system of the visited network, the indication being transmitted by the transmitter over an existing signaling channel; and
a processor 406 being in operational interconnection with the mobile money transfer system forming part of the home network for debiting the amount of funds to the account of the subscriber.
